(19) **Europäisches Patentamt**

**European Patent Office**

**Office européen des brevets**

(11) **EP 0 620 803 B1**

(12) **EUROPEAN PATENT SPECIFICATION**

(45) Date of publication and mention
of the grant of the patent:
**03.03.1999 Bulletin 1999/09**

(21) Application number: **93901411.4**

(22) Date of filing: **09.12.1992**

(51) Int. Cl.$^6$: **C01B 21/072**

(86) International application number:
**PCT/US92/10574**

(87) International publication number:
**WO 93/14027 (22.07.1993 Gazette 1993/18)**

(54) **PROCESS FOR PREPARING ULTRAFINE ALUMINUM NITRIDE POWDER**

VERFAHREN ZUR HERSTELLUNG VON ALUMINIUMNITRIDPULVER

PROCEDE DE PREPARATION DE POUDRE DE NITRURE D'ALUMINIUM ULTRAFINE

(84) Designated Contracting States:
**DE FR GB IT NL**

(30) Priority: **10.01.1992 US 819425**

(43) Date of publication of application:
**26.10.1994 Bulletin 1994/43**

(73) Proprietor:
**THE DOW CHEMICAL COMPANY
Midland, Michigan 48674 (US)**

(72) Inventors:
• **WEIMER, Alan, W.
Midland, MI 48642 (US)**
• **COCHRAN, Gene, A.
Midland, MI 48640 (US)**
• **HENLEY, John, P.
Midland, MI 48640 (US)**

• **EISMAN, Glenn, A.
Midland, MI 48640 (US)**

(74) Representative:
**Burford, Anthony Frederick
W.H. Beck, Greener & Co.
7 Stone Buildings
Lincoln's Inn
London WC2A 3SZ (GB)**

(56) References cited:
EP-A- 0 247 907      EP-A- 0 272 377
EP-A- 0 327 401      WO-A-88/02770
WO-A-92/19534        FR-A- 1 279 586
GB-A- 2 127 709      US-A- 5 126 121

• JOURNAL OF MATERIALS SCIENCE vol. 18 ,
1983 pages 2011 - 2016 G.P. VISSOKOV ET AL.
'Chemical preparation of ulta-fine aluminium
nitride by electric-arc plasma.'

## Description

The present invention generally concerns a process for preparing aluminum nitride (AlN) powder. The present invention more particularly concerns preparing AlN powder that has a surface area greater than 10 square meters per gram ($m^2/g$), desirably greater than 15 $m^2/g$.

Aluminum nitride synthesis generally occurs via one of four known processes. One process involves carbothermally reducing and nitriding alumina

$$Al_2O_3 + 3C + N_2 \rightarrow 2AlN + 3CO).$$

A second process directly reacts aluminum metal with nitrogen

$$(2Al + N_2 \rightarrow 2AlN).$$

A less common process reacts aluminum chloride and ammonia in a vapor phase

$$(AlCl_3 + 4NH_3 \rightarrow AlN + 3NH_4Cl).$$

US-A-3,128,153 discloses an even less common process wherein aluminum phosphide reacts with ammonia

$$(AlP + NH_3 \rightarrow AlN + 1/4P_4 + 3/2H_2).$$

The carbothermal reduction reaction is endothermic and requires approximately 335 kilojoules per gram-mole of AlN at 1873 K. The reaction is generally carried out at a temperature within a range of 1673 to 1973 K as disclosed by Kuramoto et al. in US-A-4,618,592. The resultant AlN powder is fine enough to allow consolidation to near theoretical density via pressureless sintering in the presence of sintering aids. Higher temperatures generally result in the formation of sintered agglomerates of AlN particles. The agglomerates are not amenable to densification by pressureless sintering.

The direct reaction of aluminum metal to AlN is exothermic and generates approximately 328 kilojoules per gram-mole of AlN at 1800 K. Aluminum metal melts at about 933 K. The reaction of aluminum and nitrogen starts at about 1073 K. The reaction, once initiated, is self-propagating if not controlled. An uncontrolled reaction can reach AlN sintering temperatures and remain at these temperatures for extended periods of time. The uncontrolled reaction typically yields sintered AlN agglomerates having a surface area, as determined by Brunauer-Emmett-Teller (BET) analysis, of less than 2 $m^2/g$. The agglomerates are not readily amenable to further sintering to densities approaching theoretical density via pressureless sintering techniques.

One variation of the direct nitridation process employs plasma reactors to vaporize aluminum metal at temperatures approaching 10,000 K. The vaporized metal then reacts with nitrogen, ammonia, or mixtures of nitrogen and ammonia or nitrogen and hydrogen. The resultant AlN powder particles have an average particle size of less than 0.1 micrometer ($\mu$m) and a surface area of approximately 30 $m^2/g$. These particles can be pressureless sintered to near theoretical density at temperatures as low as 1873 K.

G. P. Vissokov et al (J. Mater. Sci. 18 (1983) 2011-2016) discusses the preparation of ultra-fine aluminum nitride by interaction of aluminum and nitrogen in an electric-arc plasma. The paper is essentially theoretical and calculates that aluminum nitride of maximum dispersity and purity can be obtained at temperatures of 2900 to 3400 K and relative residence times of 1.0 to 1.1. The relative residence time is the particle residence time divided by the time necessary for full particle evaporation. In the experimental data reported, aluminum powder was injected into the end of the active part of the arc by means of nitrogen and argon or an argon/nitrogen mixture was used as the plasma-forming gas. These experiments were conducted in cold-wall or hot-wall reactors at 2000 to 4000 K.

WO-A-9219534 (published 12th November 1992) discloses the preparation of aluminum nitride powder by rapidly heating powdered aluminum alone or in admixture with a previously prepared aluminum nitride powder or a powdered removable or compatible material in the presence of nitrogen to a temperature within the range 1873 to 2373 K. Reference is made to the use of a temperature of 2473 K and a comparative example is conducted at said temperature."

One aspect of the present invention is a process for preparing AlN powder that comprises passing particulate Al metal and a nitrogen source through a heated reaction zone that is maintained at a temperature sufficient to individually heat substantially all of the Al metal particles at a heating rate of at least 10,000 K per second to a temperature within a temperature range of from greater than 2473 K to 3073 K, at a rate of flow sufficient to maintain substantially all of the Al metal particles within said temperature range for a time period of from 2 to 10 seconds, the time period being sufficient to convert the particulate Al metal to a product having an AlN content of at least 75 percent by weight (wt-%), based upon product weight, the AlN having a surface area of greater than 10 $m^2/g$.

A second aspect of the present invention is a process for preparing a composite or a mixture of AlN powder and a powdered compatible material that comprises passing a nitrogen source and an admixture of a powdered compatible solid material and particulate Al metal through a heated reaction zone that is maintained at a temperature sufficient to individually heat substantially all of the admixture particles at a heating rate of at least 100 K per second to a temperature within a temperature range of from greater than 2473 K to 3073 K, at a rate of flow sufficient to maintain substantially all of the admixture particles within said temperature range for a time period of from 0.2 to 10 seconds, the compatible solid material being present in an amount sufficient to yield a material containing AlN and the compatible material, the time period being sufficient to convert at least 75 wt-% of the particulate Al metal to AlN, the AlN having a surface area greater than 10 $m^2$/g. The product beneficially has an AlN content of at least 90 wt-%, based upon product weight.

A third aspect of the present invention is a carbothermal process for preparing AlN powder that comprises passing a nitrogen source and a powdered admixture of $Al_2O_3$ and carbon through a heated reaction zone that is maintained at a temperature sufficient to individually heat substantially all of the powdered admixture particles at a heating rate of at least 100 K per second to a temperature within a temperature range of from 2473 K to 3073 K, at a rate of flow sufficient to maintain substantially all of the powdered admixture particles within said temperature range for a time period of from 0.2 to 20 seconds, the time period being sufficient to convert the powdered admixture to a product having an AlN content of at least 75 wt-%, based upon product weight, the AlN having a surface area of greater than 10 $m^2$/g.

In an aspect related to the first three aspects, the product passes from the heated reaction zone into a cooling zone maintained at a temperature sufficient to individually cool substantially all product particles at a cooling rate of at least 100 K per second to a temperature below 1073 K. The product must be cooled rapidly in order to minimize, if not eliminate, partial sintering or agglomeration of product particles. Partial sintering may interfere with subsequent pressureless sintering efforts. Agglomeration may lead to unacceptably low product surface areas.

In a related aspect, the product can be passed through the heated reaction zone one or more additional times to increase the yield of AlN. The product can be passed through the reaction zone either alone or in conjunction with an amount of the powdered admixture.

A fourth aspect of the present invention is a process for converting AlN having a surface area of less than 15 $m^2$/g to AlN having a surface area greater than or equal to 15 $m^2$/g that comprises passing a nitrogen source and powdered AlN having a surface area of less than 15 $m^2$/g through a heated reaction zone maintained at a temperature sufficient to individually heat substantially all of the AlN particles at a heating rate of at least 100 K per second to a temperature within a temperature range of from greater than 2473 K to 3073 K, at a rate of flow sufficient to maintain substantially all of the AlN particles within said temperature range for a period of time sufficient to dissociate the AlN into Al and nitrogen as dissociation products and thereafter passing the dissociation products into a cooling zone maintained at a temperature sufficient to convert the dissociation products into AlN particles having a surface area of greater than 15 $m^2$/g and individually cool substantially all of said particles at a cooling rate of at least 100 K per second to a temperature below 1073 K.

The process of the present invention is suitably carried out in an apparatus like that disclosed in US-A-5,110,565. The apparatus comprises four principal components: a cooled reactant transport member; a reactor chamber; a heating means; and a cooling chamber. A purge gas may be introduced into spaces surrounding the reactor chamber.

The transport member may be likened to a conduit disposed within a gas flow space that is desirably annular. The transport member is suitably maintained at a temperature below that at which powdered aluminum metal melts for the first and second aspects of the invention. Similar temperatures suffice for the third aspect of the invention. The temperature is beneficially sufficient to substantially preclude the powdered reactants, particularly Al metal and $Al_2O_3$, from melting and coalescing either within the transport member or proximate to its exit. Accordingly, the temperature is desirably sufficient to allow substantially all of the powdered reactants to enter the reactor chamber as discrete particles. A temperature below the melting point of Al (about 933 K) yields satisfactory results. The range is beneficially from 275 to 373 K, desirably from 275 to 323 K, and preferably from 275 to 298 K. Higher temperatures may be used in the fourth aspect as AlN sublimes at 2273 K and dissociates at 2473 K. The higher temperatures beneficially do not exceed the sublimation temperature.

The powdered reactants, whether they be Al metal, an admixture of powdered Al metal and a powdered compatible material, or a powdered admixture of $Al_2O_3$ and carbon, are suitably fed into the transport section via a powder feeding mechanism. AlN having a surface area of less than 15 $m^2$/g may be fed in the same manner. The powder feeding mechanism is not particularly critical so long as it provides a metered or controlled flow of powdered material to the transport section. As such, the feeding mechanism may be a single screw feeder, a twin screw feeder, a vibratory feeder, a rotary valve feeder or some other conventional feeder.

The powdered Al metal should have a purity greater than 97 percent and a weighted mean particle size less than 500 $\mu$m. The compatible solid material is suitably AlN or a fine ceramic powder that, when mixed with the AlN product, forms a desirable powdered admixture or composite product powder. Suitable ceramic powders include silicon carbide, boron nitride, boron carbide, titanium diboride, silicon nitride, titanium nitride, titanium carbide, tungsten carbide or tantalum nitride. The fine ceramic powder used as a compatible material beneficially has a purity of greater than 98%, a surface area of from 10 to 30 $m^2$/g and a particle size within a range of from 0.01 to 1 $\mu$m. AlN, when used as a compatible material, is suitably a portion of the AlN product.

Admixtures having a compatible material content of from 20 to 95 wt-%, based on admixture weight, yield beneficial results. The compatible material content is desirably from 28 to 91 wt-% and preferably from 33 to 67 wt-%, based upon admixture weight.

The $Al_2O_3$ used in the present invention suitably has a particle size within a range of from 0.05 to 20 $\mu$m and a purity greater than 99.8 percent. The range is beneficially from 0.2 to 2 $\mu$m. The purity is desirably greater than 99.97 percent. Purities of 99.99 percent or greater will produce satisfactory products, but at a greater cost.

The carbon is suitably a material selected from acetylene black, plant carbon, thermal black, coke, carbon black and graphite. The material is beneficially carbon black or graphite.

The admixtures may be prepared by using a conventional mixing apparatus. Illustrative apparatus include ribbon blenders, roller mills, vertical screw mixers, V-blenders, and fluidized zone mixers such as that sold under the trade designation FORBERG™.

The powder feed rate varies with reactor design and capacity as well as the powdered reactants. By way of illustration, an acceptable feed rate for powdered aluminum is from 0.02 to 0.5 kilograms per minute (kg/min) for a reactor having a reaction zone volume of 2.16 ft$^3$ (0.06 m$^3$). Acceptable feed rates for reactors having greater reaction zone volumes are readily determined without undue experimentation.

Gaseous nitrogen ($N_2$) is fed into the transport section in an amount and at a rate of flow sufficient to satisfy two requirements. First, the flow rate should be at least stoichiometric, or sufficient to satisfy the relevant equation. The equation is

$$2\,Al + N_2 \rightarrow 2AlN$$

for the direct nitridation reaction and

$$Al_2O_3 + 3C + N_2 \rightarrow 2AlN + 3CO$$

for the carbothermal reaction. Second, the flow rate should be sufficient to entrain either the powdered reactants or the low (less than 15 m$^2$/g) surface area AlN powder prior to the entry thereof into the reactor chamber. The flow rate is suitably at least one and one-half times stoichiometric. The flow rate is beneficially from 1.5 to 4 times stoichiometric, desirably from 1.5 to 3 times stoichiometric. An excessively high flow rate decreases residence time of powdered material, either the reactants or the low surface area AlN powder, within the reaction zone and, in turn, reactor capacity. The flow rate for the carbothermal reaction is typically greater than that for the direct nitridation reaction. By way of illustration, a suitable flow rate for the direct nitridation reaction might be 3 standard cubic feet per minute (SCFM) (85 standard liters per minute (SLM)) whereas a suitable flow rate for the carbothermal reaction might be 4 SCFM (113 SLM).

Gaseous nitrogen ($N_2$(g))is also fed into the gas flow space. This gas flows from the gas flow space into the reactor chamber. In doing so, it acts to minimize, if not substantially eliminate, contact of powdered reactants with reactor chamber surfaces near their juncture with the transport member exit. Such contact is undesirable because these surfaces tend to be at temperatures that promote coalescence of the powdered reactants, particularly Al metal and $Al_2O_3$. Coalescence leads, in turn, to cessation of operations due to reactor plugging.

The $N_2$(g) should be as pure as possible. Moisture and residual oxygen impurities adversely affect AlN product quality. The $N_2$(g) dew point is beneficially less than 233 K and desirably less than 193 K. Oxygen impurity levels are beneficially less than 5 and desirably less than 1 part per million parts (ppm) of gas. If the moisture content is too high, it may be necessary to pass the gaseous nitrogen through a drying bed or desiccant. The gas may also be purified by conventional means to reduce the residual oxygen content.

The $N_2$(g) flow rates control residence time of the Al metal powder, the admixture of a powdered compatible solid material and particulate Al, or the powdered admixture of $Al_2O_3$ and carbon within the reaction zone. The $N_2$(g) flow rates also control residence time of the low surface area AlN powder within that zone. When Al metal powder, either alone or in admixture with a powdered compatible solid material, is added to the reaction zone, the residence time is suitably within a range of from 0.2 second to 10 seconds, beneficially from 2 to 8 seconds and desirably from 4 to 6 seconds. Residence times of less than 0.2 second tend to yield an incompletely converted product containing unreacted metal. Residence times in excess of 10 seconds provide no great advantage in terms of conversion percentage. When low surface area AlN is added to the heated reaction zone, the same residence times provide satisfactory results. When a powdered admixture of $Al_2O_3$ and carbon is added to the reaction zone, the residence time is suitably within a range of from 0.2 second to 20 seconds, beneficially from 2 to 16 seconds and desirably from 4 to 15 seconds. Residence times of less than 0.2 seconds do not provide a satisfactory AlN product yield. Residence times in excess of 20 seconds offer no substantial advantage in terms of conversion percentage.

Ammonia may be used instead of, or in addition to, $N_2$(g). A mixture of $N_2$(g) and hydrogen may also be used.

The entrained flow of powdered reactants or low surface area AlN powder enters the reaction zone in a form approximating that of a well dispersed dust cloud. The powdered reactants or low surface area AlN powder particles are heated almost instantly by gas convective and conductive heat transfer and by thermal radiation from reactor walls that define the heated reaction zone. The reaction zone is beneficially maintained at a temperature from 2473 to 2773 K except that the temperature exceeds 2473 K in those embodiments excluding reaction at 2473 K. Temperatures below 2473 K lead to AlN products with surface areas of 8 $m^2$/g or less. The actual temperature within the reaction zone may be determined by optical pyrometry or other suitable means.

The reactor walls may be conventionally heated either indirectly by radiation from heating elements spaced around them, inductively via an inductive coil, or directly by electrical resistance. The powdered reactants or low surface area AlN powder particles are heated at rates within a range of from 100 to 10,000,000 K per second. The range is beneficially from 1000 to 10,000,000 K per second, desirably from 10,000 to 1,000,000 K per second. The rate at which an individual particle is heated varies in response to a number of factors. The factors include size, proximity to the source of heat, and density of the dust cloud. The rate should not, however, be so low that substantial coalescence of reactant particles can occur during a melting phase prior to reaching reaction temperatures. In the case of low surface area AlN particles, the rate should not be so low that the AlN passes into the cooling zone without being substantially dissociated into $N_2$(g) and Al as dissociation products.

The gaseous nitrogen flow that provides an entrained flow of powdered reactants into the reaction zone also provides an entrained flow of powdered AlN or, in the case of low surface area AlN feed material, dissociation products out of the reaction zone. The entrained flow or dust cloud of AlN powder or the entrained flow of dissociation products beneficially exits the reaction zone and almost immediately enters a cooling zone. It is believed that the dissociation products recombine to form AlN powder having a surface area in excess of 15 $m^2$/g at or near the cooling zone entrance. The cooling zone quenches or rapidly cools the AlN powder below its reaction temperature. Rapid cooling helps maintain the very fine particle size of AlN particles that form upon cooling below the dissociation temperature (about 2473 K) of AlN. Cooling rates within the cooling zone beneficially approximate the heating rates within the reaction zone. The cooled walls of the cooling zone and cooled gas tend to rapidly deplete remaining amounts of sensible heat from the AlN particles. If cooling does not occur at a sufficiently rapid rate, AlN particles tend to fuse or sinter together, thereby resulting in formation of undesirable agglomerates or large grains of AlN product. The fused particles tend to have surface areas much lower than 10 $m^2$/g. Actual cooling times vary depending upon factors such as particle size, cooling zone configuration and gas flow rates. The cooled AlN particles are suitably collected and processed by conventional technology.

The AlN product has a surface area that is beneficially greater than 10 $m^2$/g when powdered reactants are used as a starting material and greater than 15 $m^2$/g

when low surface area AlN powder is used as the starting material. The surface area is desirably within a range of greater than 15 to 65 $m^2$/g. The range is preferably from 19 to 60 $m^2$/g.

The following Examples 1 and 2 illustrate, but do not limit, the scope of the invention. Reference Example 1 and Comparative Example A are not within the scope of the claims. All parts and percentages are by weight unless otherwise stated.

Reference Example 1 - Illustrating way of carrying out process of the invention

A 6 inch (0.152m) inside diameter by 11 feet (3.35 m) long heated zone vertical graphite tube furnace was brought to, and maintained at, a temperature of 2200°C (2473 K) as measured by optical pyrometers.

High purity Al metal powder, commercially available from Aluminum Company of America (Alcoa) under the trade designation 7123, was loaded into an overhead feed hopper that was purged with $N_2$(g). The Al powder, nominally 99.97% pure, had a surface area of 0.449 $m^2$/g, an oxygen content of 0.223 %, a silicon content of 75 ppm, a calcium content of less than 10 ppm, a chromium content of less than 10 ppm, an iron content of 44 ppm and a mean particle size of 18 μm. The $N_2$(g) gas had a dew point of less than -80°C (193 K) and an oxygen content of less than one ppm.

The powdered Al was conveyed from the hopper to the top of the heated zone of the tube furnace via a loss-in-weight twin screw feeder connected to a reactant transport member like that described herein at a rate of 0.2 pounds (0.09 kg) per minute. The reactant transport member was maintained at a temperature of 283 K. Nitrogen gas flowed through the reactant transport member at a rate of 3 SCFM (85 SLM) thus sweeping the Al powder with it into the top of the heated zone. An additional one SCFM (28.3 SLM) of $N_2$(g) flowed through the gas flow space within which the transport member was disposed and into the top of the furnace. The flow of gas was sufficient to provide the powder with an average residence time in the heated zone of about 4.3 seconds accounting for the decrease in nitrogen flow due to reaction and the conversion to AlN. The characteristic heating time for the feed Al particles equated to an estimated heating rate of approximately $10^5$ K/second.

The submicron product powder was swept through the cooling zone by approximately 3 SCFM (85 SLM) of unreacted nitrogen gas exiting the reaction zone. The calculated residence time in the cooling zone was approximately 3.2 minutes.

Product powder from the reactor was collected downstream from a cooling zone and analyzed. The cooling zone had an inside diameter of 18 inches (45.7 cm), a length of six feet (1.8m) and a volume of 10.6 $ft^3$ (0.3 $m^3$). Coolant maintained at a temperature of 283 K and flowing through a jacket surrounding the cooling zone cooled the product powder and gas to a measured temperature of approximately 303 K. The rate of cooling approximated the rate of heating. An x-ray diffraction pattern of the product indicated that the powder was substantially AlN with some unreacted metal. The oxygen and nitrogen contents of powder placed into a glove box with a $N_2(g)$ atmosphere immediately following synthesis were determined by a LECO analyzer to be, respectively, 0.16% and 27.1%. The nitrogen content equated to an AlN content of 79%. The powder had an unmilled aggregate BET surface area of 15.1 $m^2$/g.

The product powder was dry ball milled for two hours using AlN media to break up light agglomerates of product. The term "light agglomerates" describes agglomerates that break apart readily when rubbed between thumb and fingers with minimal pressure. The BET surface area after ball milling was 15.7 $m^2$/g. Taking into account about 21% of unreacted aluminum with an estimated surface area of 0.5 $m^2$/g, the AlN had a calculated, weighted, average surface area of 19.7 $m^2$/g.

Example 1

Similar results to those of Reference Example 1 are expected at temperatures as high as 3073 K. The AlN surface area tends to increase as temperatures in the heated zone increase above 2473 K.

Replication of the process at heating zone temperatures below 2473 K, such as 1873 K or 2373 K, yields a product wherein the AlN has a surface area that is much smaller. A typical surface area resulting from such temperatures is on the order of 5 $m^2$/g.

Comparative Example A - Carbothermal Process at 2223 K

The apparatus of Reference Example 1 was used to convert a powdered admixture of $Al_2O_3$ and carbon black to AlN via a carbothermal reduction-nitridation reaction. The powdered admixture was prepared from 25 pounds (lb) (11.4 kg) of acetylene carbon black and 62 lb (28.2 kg) of $Al_2O_3$. The $Al_2O_3$, commercially available from Aluminum company of America under the trade designation A16-SG, had a surface area of 9.46 $m^2$/g. The carbon, commercially available from Chevron Chemical Company under the trade designation Shawinigan™ acetylene black, had a surface area of 67 $m^2$/g. The $Al_2O_3$ and carbon black were blended by ball milling for 4 hours.

Two hundred lbs (90.8 kg) of deionized water were loaded into a 55 gallon (208 l) plastic drum. The following components were added to the water and mixed for 5 minutes: 1.5 Triton® X-100, an alkylphenoxy(polyethoxy)ethanol, commercially available from Rohm & Haas Co.; 40 milliliters (ml) of Arquad® C-50, a coco-alkyltrimethyl quaternary ammonium chloride, commercially available from Akzo Chemicals, Inc.; and 150 ml of Antifoam™ B, a silicone product, commercially available from Dow Corning Corporation. The solution pH was adjusted to a pH of 3.5 by adding 20 ml of a 65 % nitric acid solution. Thirty five lbs (15.9 kg) of the ball milled admixture were added to the deionized water solution, then stirred for 30 minutes before adding 17.75 lb (8.06 kg) of a 20 % colloidal $Al_2O_3$ solution with continued agitation. The solution was agitated for an additional two hours before it was spray dried while maintaining an outlet temperature of 403 K. The spray dried powder had a carbon content of 26.6% as determined by analysis using a LECO model IR-412 with a Model HF-400 furnace.

The spray dried powder was loaded into the feed hopper and purged with $N_2(g)$. The furnace was brought to, and maintained at, a temperature of 2173 K. $N_2(g)$ flowed into the reaction zone at the same rate as in Reference Example 1. The powder was metered into the cooled reactant transport member at a rate of 0.2 lb/minute (0.09 kg/min) as in Reference Example 1. The flow rate provided an approximate residence time of 3.2 seconds. The product powder was collected downstream from the cooling zone as in Reference Example 1. The powder was reloaded into the hopper and passed through the reaction zone a second time while the furnace was at a temperature of 2123 K. The reloading was replicated two additional times save for increasing the temperature to 2223 K to provide a total residence time of about 13 seconds.

X-ray diffraction analysis of the product showed that it was substantially AlN. A portion of the product was placed in a furnace and heated at 1123 K for 2 hours in the presence of air to remove residual carbon. The heated product was analyzed to contain 1.1% carbon, 8.0% oxygen and 32.0% nitrogen, indicating an AlN content of about 82%. The BET surface area was 6.0 $m^2$/g.

Example 2 Carbothermal Process at 2573 K

The remaining product from Comparative Example A was loaded into the feed hopper and passed through the heated reaction zone. The furnace was heated to, and maintained at, 2573 K for this pass. The residence time in the reaction zone was about 3.0 seconds.

The powder, after heat treatment as in Comparative Example A, contained 0.6 % carbon, 8.7% oxygen and 31.7% nitrogen, indicating an AlN content of about 80.9%. The BET surface area was 52.6 $m^2$/g.

By contrasting Example 2 with Comparative Example A, the beneficial increase in surface area by operating above the dissociation temperature of AlN is readily apparent. Similar results are expected by eliminating the low temperature passes of Comparative Example A and using one or more passes at temperatures at or above the dissociation temperature. Suitable temperatures and other operating parameters are disclosed herein.

**Claims**

1. A process for preparing aluminum nitride powder that comprises passing a nitrogen source and a particulate material selected from:

(a) particulate aluminum metal,
(b) a powdered admixture of alumina and carbon,
(c) an admixture of particulate aluminum metal and a powdered compatible solid material, and
(d) aluminum nitride having a surface area of less than 15 m$^2$/g,

through a heated reaction zone maintained at a temperature sufficient to individually heat substantially all of the particles to a temperature within a temperature range of from 2200°C (2473 K) to 2800°C (3073 K) at a heating rate of at least 10,000°C (10,000 K) per second for particulate material (a) or at least 100°C (100 K) per second for particulate materials (b), (c) and (d) and at a rate of flow sufficient to maintain substantially all of the particles within said temperature range for a time period:

of from 2 to 10 seconds for particulate material (a),
of from 0.2 to 10 seconds for particulate material (c),
of from 0.2 to 20 seconds for particulate material (b), or
sufficient to dissociate the aluminum nitride (d) into aluminum and nitrogen,

and, when using particulate material (d) passing the said dissociation products into a cooling zone in which substantially all particles therein are cooled at a cooling rate of at least 100°C (100 K) per second to a temperature below 800°C (1073 K) to produce aluminum nitride particles having a surface area of greater than or equal to 15 m$^2$/g, provided:

that the particles of particulate material (a), (c) and (d) are heated to a temperature above 2200°C (2473 K) and that said time periods for the particles of particulate material (a), (b) or (c) are sufficient to provide a product having an aluminum nitride content of at least 75 percent by weight, based for particles of particulate material (a) and (c) upon product weight or for particles of particulate material (c) aluminum metal conversion, said aluminum nitride produced having a surface area of greater than 10 m$^2$/g.

2. A process for preparing aluminum nitride powder as claimed in Claim 1 that comprises passing the particulate aluminum metal (a) and a nitrogen source through a heated reaction zone maintained at a temperature sufficient to individually heat substantially all of the aluminum metal particles at a heating rate of at least 10,000°C (10,000 K) per second to a temperature within a temperature range of from greater than 2200°C (2473 K) to 2800°C (3073 K), at a rate of flow sufficient to maintain substantially all of the aluminum metal particles within said temperature range for a time period of from 2 to 10 seconds, the time period being sufficient to convert the particulate aluminum metal to a product having an aluminum nitride content of at least 75 percent by weight, based upon product weight, the aluminum nitride produced having a surface area of greater than 10 m$^2$/g.

3. A process as claimed in Claim 1 for preparing a composite or mixture of aluminum nitride powder and a powdered compatible material that comprises passing the admixture of a powdered compatible solid material and particulate aluminum metal (c) and a nitrogen source through a heated reaction zone maintained at a temperature sufficient to individually heat substantially all of the admixture particles at a heating rate of at least 100°C (100 K) per second to a temperature within a temperature range of from greater than 2200°C (2473 K) to 2800°C (3073 K), at a rate of flow sufficient to maintain substantially all of the admixture particles within said temperature range for a time period of from 0.2 to 10 seconds, the compatible solid material being present in an amount sufficient to yield a composite material containing aluminum nitride and the compatible material, the time period being sufficient to convert at least 75 percent by weight of the particulate aluminum metal to aluminum nitride, the aluminum nitride produced having a surface area of greater than 10 m$^2$/g.

4. A process as claimed in Claim 3, wherein the compatible material is selected from aluminum nitride, silicon carbide, boron nitride, boron carbide, titanium diboride, silicon nitride, titanium nitride, titanium carbide, tungsten carbide and tantalum nitride.

5. A process as claimed in Claim 4, wherein said compatible material is aluminum nitride.

6. A carbothermal process for preparing aluminum nitride powder as claimed in Claim 1 that comprises passing a nitrogen source and the powdered admixture of alumina and carbon (b) through a heated reaction zone that is maintained at a temperature sufficient to individually heat substantially all of the powdered admixture particles at a heating rate of at least 100°C (100 K) per second to a temperature within a temperature range of from 2200°C (2473 K) to 2800°C (3073 K), at a rate of flow sufficient to maintain substantially all of the powdered admixture particles within said temperature range for a time period of from 0.2 to 20 seconds, the time period being sufficient to convert the powdered admixture to a product having an aluminum nitride content of at least 75 percent by weight, based upon product weight, the aluminum nitride produced having a surface area of greater than 10 $m^2/g$.

7. A process as claimed in Claim 6, wherein the alumina has a particle size of 0.2 to 2 $\mu m$.

8. A process as claimed in Claim 6 or Claim 7, wherein the carbon is carbon black or graphite.

9. A process as claimed in anyone of Claims 2 to 8 further comprising a sequential step wherein the particulate product is passed into a cooling zone after it exits the heated reaction zone and is quenched to a temperature below that at which particulate aluminum metal is converted to aluminum nitride.

10. A process as claimed in Claim 9, wherein the product is quenched at a cooling rate of at least 100°C (100 K) per second within a time of from 0.1 second to 4 minutes after said product exits the heated reaction zone.

11. A process as claimed in Claim 1 for converting aluminum nitride having a surface area of less than 15 $m^2/g$ to aluminum nitride having a surface area greater than or equal to 15 $m^2/g$ that comprises passing a nitrogen source and the powdered aluminum nitride having a surface area of less than 15 $m^2/g$ (d) through a heated reaction zone maintained at a temperature sufficient to individually heat substantially all of the aluminum nitride particles at a heating rate of at least 100°C (100 K) per second to a temperature within a temperature range of from greater than 2200°C (2473 K) to 2800°C (3073 K), at a rate of flow sufficient to maintain substantially all of the aluminum nitride particles within said temperature range for a period of time sufficient to dissociate the aluminum nitride into aluminum and nitrogen as dissociation products and thereafter passing the dissociation products into a cooling zone maintained at a temperature sufficient to convert the dissociation products into aluminum nitride particles having a surface area of greater than 15 $m^2/g$ and individually cool substantially all of said particles at a cooling rate of at least 100°C (100 K) per second to a temperature below 800°C (1073 K).

12. A process as claimed in any one of the preceding claims, wherein the reaction zone is heated to 2200 to 2500°C (2473 to 2773 K), provided that said temperature is greater than 2200°C (2473 K) when the particulate material is particulate aluminum metal (a) or aluminium nitride having a surface area of less than 15 $m^2/g$.

13. A process as claimed in any one of the preceding claims, wherein said heating rate is 10,000 to 1,000,000°C/sec (10,000 to 1,000,000 K/sec).

**Patentansprüche**

1. Verfahren zur Herstellung von Aluminiumnitridpulver, welches das Hindurchführen einer Stickstoffquelle und eines teilchenförmigen Materials, ausgewählt aus:

    (a) teilchenförmigem Aluminiummetall,
    (b) einer pulverisierten Mischung von Aluminiumoxid und Kohlenstoff,
    (c) einer Mischung von teilchenförmigem Aluminiummetall und einem pulverförmigem kompatiblen Feststoff und
    (d) Aluminiumnitrid mit einer Oberfläche von weniger als 15 $m^2/g$

durch eine beheizte Reaktionszone umfaßt, die bei einer Temperatur gehalten wird, die ausreicht, um im wesentlichen alle Teilchen einzeln auf eine Temperatur innerhalb eines Temperaturbereichs von 2200°C (2473 K) bis 2800°C (3073 K) mit einer Heizrate von mindestens 10.000°C (10.000 K) pro Sekunde für teilchenförmiges Material (a) oder mindestens 100°C (100 K) pro Sekunde für teilchenförmige Materialien (b), (c) und (d) zu erhitzen, und mit einer Fließgeschwindigkeit, die ausreicht, um im wesentlichen alle Teilchen innerhalb dieses Temperaturbereichs für die folgenden Zeiträume zu halten:

    2 bis 10 Sekunden für teilchenförmiges Material (a),
    0,2 bis 10 Sekunden für teilchenförmiges Material (c),
    0,2 bis 20 Sekunden für teilchenförmiges Material (b) oder
    die ausreicht, um das Aluminiumnitrid (d) in Aluminium und Stickstoff zu spalten,

und das, wenn teilchenförmiges Material (d) verwendet wird, das Zuführen der Dissoziationsprodukte in eine Kühlzone umfaßt, in der im wesentlichen alle darin enthaltenen Teilchen mit einer Kühlrate von mindestens 100°C (100 K) pro Sekunde auf eine Temperatur unterhalb von 800°C (1073 K) abgekühlt werden, um Aluminiumnitridteilchen mit einer Oberfläche von größer als oder gleich 15 m²/g zu liefern, unter der Voraussetzung:

daß die Teilchen des teilchenförmigen Materials (a), (c) und (d) auf eine Temperatur oberhalb von 2200°C (2473 K) erhitzt werden und daß diese Zeiträume für die Teilchen der teilchenförmigen Materialien (a), (b) oder (c) ausreichend sind, um ein Produkt zu liefern, das einen Aluminiumnitridgehalt von wenigsten 75 Gew.-% für Teilchen des teilchenförmigen Materials (a) und (c), bezogen auf Produktgewicht, oder für Teilchen des teilchenförmigen Materials (c), bezogen auf Aluminiummetallumsetzung, zu liefern, wobei das hergestellte Aluminiumnitrid eine Oberfläche von größer als 10 m²/g aufweist.

2. Verfahren zur Herstellung von Aluminiumnitridpulver wie in Anspruch 1 beansprucht, welches das Hindurchführen des teilchenförmigen Aluminiummetalls (a) und einer Stickstoffquelle durch eine beheizte Reaktionszone umfaßt, die bei einer Temperatur gehalten wird, die ausreicht, um im wesentlichen alle Aluminiummetallteilchen einzeln mit einer Aufheizrate von mindestens 10.000°C (10.000 K) pro Sekunde auf eine Temperatur innerhalb eines Temperaturbereichs von größer als 2200°C (2473 K) bis 2800°C (3073 K) aufzuheizen, mit einer Fließgeschwindigkeit, die ausreicht, um im wesentlichen alle der Aluminiummetallteilchen innerhalb dieses Temperaturbereichs für einen Zeitraum von 2 bis 10 Sekunden zu halten, wobei der Zeitraum ausreichend ist, um das teilchenförmige Aluminiummetall in ein Produkt zu überführen, das einen Aluminiumnitridgehalt von wenigstens 75 Gew.-%, bezogen auf Produktgewicht, aufweist und das hergestellte Aluminiumnitrid eine Oberfläche von größer als 10 m²/g hat.

3. Verfahren wie in Anspruch 1 beansprucht zur Herstellung eines Komposits oder einer Mischung aus Aluminiumnitridpulver und einem pulverförmigen kompatiblen Stoff, welches das Hindurchführen der Mischung aus einem pulverförmigen kompatiblen Feststoff und teilchenförmigem Aluminiummetall (c) und einer Stickstoffquelle durch eine beheizte Reaktionszone umfaßt, die bei einer Temperatur gehalten wird, die ausreicht, um einzeln im wesentlichen alle der Mischungsteilchen mit einer Heizrate von wenigstens 100°C (100 K) pro Sekunde auf eine Temperatur innerhalb eines Temperaturbereichs von größer als 2200°C (2473 K) bis 2800°C (3073 K) zu erhitzen, mit einer Fließgeschwindigkeit, die ausreicht, um im wesentlichen alle Mischungsteilchen innerhalb dieses Temperaturbereichs für einen Zeitraum von 0,2 bis 10 Sekunden zu halten, wobei der kompatible Feststoff in einer Menge vorliegt, die ausreicht, um einen Verbundstoff zu erhalten, der Aluminiumnitrid und den kompatiblen Stoff enthält, und der Zeitraum ausreicht, um mindestens 75 Gew.-% des teilchenförmigen Aluminiummetalls zu Aluminiumnitrid umzusetzen und das hergestellte Aluminiumnitrid eine Oberfläche von größer als 10 m²/g aufweist.

4. Verfahren wie in Anspruch 3 beansprucht, wobei der kompatible Stoff aus Aluminiumnitrid, Siliciumcarbid, Bornitrid, Borcarbid, Titandiborid, Siliciumnitrid, Titannitrid, Titancarbid, Wolframcarbid und Tantalnitrid ausgewählt ist.

5. Verfahren wie in Anspruch 4 beansprucht, wobei der kompatible Stoff Aluminiumnitrid ist.

6. Carbothermisches Verfahren zur Herstellung von Aluminiumnitridpulver wie in Anspruch 1 beansprucht, welches das Hindurchführen einer Stickstoffquelle und der pulverförmigen Mischung von Aluminiumoxid und Kohlenstoff (b) durch eine beheizte Reaktionszone umfaßt, die bei einer Temperatur gehalten wird, die ausreicht, um im wesentlichen alle der pulverförmigen Mischungsteilchen einzeln mit einer Heizrate von wenigstens 100°C (100 K) pro Sekunde auf eine Temperatur innerhalb eines Temperaturbereichs von 2200°C (2473 K) bis 2800°C (3073 K) zu erhitzen, mit einer Fließgeschwindigkeit, die ausreicht, um im wesentlichen alle pulverförmigen Mischungsteilchen innerhalb dieses Temperaturbereichs für einen Zeitraum von 0,2 bis 20 Sekunden zu halten, wobei der Zeitraum ausreicht, um die pulverförmige Mischung zu einem Produkt umzusetzen, das einen Aluminiumnitridgehalt von mindestens 75 Gew.-%, bezogen auf Produktgewicht, aufweist, und das hergestellte Aluminiumnitrid eine Oberfläche von größer als 10 m²/g hat.

7. Verfahren wie in Anspruch 6 beansprucht, wobei das Aluminiumoxid eine Teilchengröße von 0,2 bis 2 μm aufweist.

8. Verfahren wie in Anspruch 6 oder 7 beansprucht, wobei der Kohlenstoff Ruß oder Graphit ist.

9. Verfahren wie in einem der Ansprüche 2 bis 8 beansprucht, das weiterhin einen nachfolgenden Schritt umfaßt, in dem das teilchenförmige Produkt, nachdem es die beheizte Reaktionszone verläßt, in eine Kühlzone geführt wird und auf eine Temperatur unterhalb einer Temperatur abgeschreckt wird, bei der teilchenförmiges Aluminiummetall zu Aluminiumnitrid umgesetzt wird.

10. Verfahren wie in Anspruch 9 beansprucht, wobei das Produkt mit einer Kühlrate von mindestens 100°C (100 K) pro Sekunde innerhalb einer Zeit von 0,1 Sekunden bis 4 Minuten, nachdem dieses Produkt die beheizte Reaktionszone verläßt, abgeschreckt wird.

11. Verfahren wie in Anspruch 1 beansprucht zur Umsetzung von Aluminiumnitrid mit einer Oberfläche von weniger als 15 $m^2$/g zu Aluminiumnitrid mit einer Oberfläche von größer als oder gleich 15 $m^2$/g, welches das Hindurchführen einer Stickstoffquelle und des pulverförmigen Aluminiumnitrids mit einer Oberfläche von weniger als 15 $m^2$/g (d) durch eine beheizte Reaktionszone umfaßt, die bei einer Temperatur gehalten wird, die ausreicht, um im wesentlichen alle Aluminiumnitridteilchen einzeln mit einer Heizrate von mindestens 100°C (100 K) pro Sekunde auf eine Temperatur innerhalb eines Temperaturbereichs von größer als 2200°C (2473 K) bis 2800°C (3073 K) zu erhitzen, mit einer Fließgeschwindigkeit, die ausreicht, um im wesentlichen alle der Aluminiumnitridteilchen innerhalb dieses Temperaturbereichs für einen Zeitraum zu halten, der ausreicht, um das Aluminiumnitrid in Aluminium und Stickstoff als Dissoziationsprodukte zu zersetzen, und anschließendes Hindurchführen der Dissoziationsprodukte in eine Kühlzone, die bei einer Temperatur gehalten wird, die ausreicht, um die Dissoziationsprodukte in Aluminiumnitridteilchen umzusetzen, die eine Oberfläche von größer als 15 $m^2$/g aufweisen, und einzeln im wesentlichen alle dieser Teilchen mit einer Kühlrate von wenigstens 100°C (100 K) pro Sekunde auf eine Temperatur unterhalb 800°C (1073 K) abzukühlen.

12. Verfahren wie in einem der vorstehenden Ansprüche beansprucht, wobei die Reaktionszone auf 2200 bis 2500°C (2473 bis 2773 K) aufgeheizt wird, unter der Voraussetzung, daß diese Temperatur größer als 2200°C (2473 K) ist, wenn der teilchenförmige Stoff teilchenförmiges Aluminiummetall (a) oder Aluminiumnitrid mit einer Oberfläche von weniger als 15 $m^2$/g ist.

13. Verfahren wie in einem der vorstehenden Ansprüche beansprucht, wobei die Heizrate 10.000 bis 1.000.000°C/s (10.000 bis 1.000.000 K/s) beträgt.

## Revendications

1. Procédé pour préparer de la poudre de nitrure d'aluminium qui consiste à faire passer une source d'azote et une matière particulaire choisie parmi:

(a) l'aluminium métallique particulaire,
(b) un mélange de poudres d'alumine et de carbone,
(c) un mélange d'aluminium métallique particulaire et une matière solide compatible en poudre, et
(d) du nitrure d'aluminium ayant une surface spécifique inférieure à 15 $m^2$/g,

à travers une zone de réaction chauffée maintenue à une température suffisante pour chauffer individuellement et essentiellement toutes les particules à une température comprise dans une gamme de températures allant de 2 200°C (2 473 K) à 2 800°C (3 073 K) à une vitesse de chauffage d'au moins 10 000°C (10 000 K) par seconde pour la matière particulaire (a) ou d'au moins 100°C (100 K) par seconde pour les matières particulaires (b), (c) et (d) et avec un débit suffisant pour maintenir essentiellement toutes les particules dans ladite gamme de températures pendant une durée:

de 2 à 10 secondes pour la matière particulaire (a),
de 0,2 à 10 secondes pour la matière particulaire (c),
de 0,2 à 20 secondes pour la matière particulaire (b), ou
suffisante pour dissocier le nitrure d'aluminium (d) en aluminium et en azote,

et, lorsque l'on utilise la matière particulaire (d) à faire passer lesdits produits de dissociation dans une zone de refroidissement dans laquelle essentiellement toutes les particules dans celle-ci sont refroidies à une vitesse de refroidissement d'au moins 100°C (100 K) par seconde à une température inférieure à 800°C (1 073 K) afin de produire des particules de nitrure d'aluminium ayant une surface spécifique supérieure ou égale à 15 $m^2$/g, à condition:

que les particules de matière particulaire (a), (c) et (d) soient chauffées à une température au-dessus de 2 200°C (2 473 K) et que lesdites durées pour des particules de matière particulaire (a), (b) ou (c) soient suffisantes pour fournir un produit ayant une teneur en nitrure d'aluminium d'au moins 75 pourcent en poids, en se basant pour les particules de matière particulaire (a) et (c) sur le poids de produit ou pour les particules de matière particulaire (c) sur la conversion en aluminium métallique, ledit nitrure d'aluminium produit ayant une surface spécifique supérieure à 10 $m^2$/g.

2. Procédé pour préparer une poudre de nitrure d'aluminium selon la revendication 1 qui consiste à faire passer l'aluminium métallique particulaire (a) et une source d'azote à travers une zone de réaction chauffée maintenue à une température suffisante pour chauffer individuellement et essentiellement toutes les particules d'aluminium métallique à une vitesse de chauffage d'au moins 10 000°C (10 000 K) par seconde à une température comprise dans une gamme de températures supérieure à 2 200°C (2 473 K) et inférieure à 2 800°C (3 073 K), à un débit suffisant pour maintenir essentiellement toutes les particules d'aluminium métallique dans ladite gamme de températures pendant une durée de 2 à 10 secondes, la durée étant suffisante pour convertir l'aluminium métallique particulaire en un produit ayant une teneur en nitrure d'aluminium d'au moins 75 pourcent en poids, par rapport au poids du produit, le nitrure d'aluminium produit ayant une surface spécifique supérieure à 10 m$^2$/g.

3. Procédé selon la revendication 1 pour préparer un composite ou mélange de poudres de nitrure d'aluminium et d'une matière compatible en poudre qui consiste à faire passer le mélange d'une matière solide compatible en poudre et de l'aluminium métallique particulaire (c) et une source d'azote à travers une zone de réaction chauffée maintenue à une température suffisante pour chauffer individuellement et essentiellement toutes les particules du mélange à une vitesse de chauffage d'au moins 100°C (100 K) par seconde à une température comprise dans une gamme de températures supérieures à 2 200°C (2 473 K) et inférieures à 2 800°C (3 073 K), avec un débit suffisant pour maintenir essentiellement toutes les particules du mélange dans ladite plage de températures pendant une durée de 0,2 à 10 secondes, la matière solide compatible étant présente en quantité suffisante pour produire une matière composite contenant du nitrure d'aluminium et la matière compatible, la durée étant suffisante pour convertir au moins 75 pourcent en poids de l'aluminium métallique particulaire en nitrure d'aluminium, le nitrure d'aluminium produit ayant une surface spécifique supérieure à 10 m$^2$/g.

4. Procédé selon la revendication 3, dans lequel la matière compatible est choisie parmi le nitrure d'aluminium, le carbure de silicium, le nitrure de bore, le carbure de bore, le diborure de titane, le nitrure de silicium, le nitrure de titane, le carbure de titane, le carbure de tungstène et le nitrure de tantale.

5. Procédé selon la revendication 4, dans lequel ladite matière compatible est le nitrure d'aluminium.

6. Procédé carbothermique pour préparer de la poudre de nitrure d'aluminium selon la revendication 1 qui consiste à faire passer une source d'azote et le mélange en poudre d'alumine et de carbone (b) à travers une zone de réaction chauffée qui est maintenue à une température suffisante pour chauffer individuellement et essentiellement toutes les particules du mélange en poudre à une vitesse de chauffage d'au moins 100°C (100 K) par seconde à une température comprise dans une gamme de températures de 2 200°C (2 473 K) à 2 800°C (3 073 K) avec un débit suffisant pour maintenir essentiellement toutes les particules du mélange en poudre dans ladite plage de températures pendant une durée de 0,2 à 20 secondes, la durée étant suffisante pour convertir le mélange en poudre en un produit ayant une teneur en nitrure d'aluminium d'au moins 75 pourcent en poids, par rapport au poids du produit, le nitrure d'aluminium produit ayant une surface spécifique supérieure à 10 m$^2$/g.

7. Procédé selon la revendication 6, dans lequel l'alumine possède une granulométrie de 0,2 à 2 $\mu$m.

8. Procédé selon l'une des revendications 6 ou 7, dans lequel le carbone est du noir de carbone ou de graphite.

9. Procédé selon l'une des revendications 2 à 8 comprenant de plus une étape suivante dans laquelle le produit particulaire passe dans une zone de refroidissement après être sorti de la zone de réaction chauffée et est trempé à une température au-dessous de celle à laquelle l'aluminium métallique particulaire est converti en nitrure d'aluminium.

10. Procédé selon la revendication 9, dans lequel le produit est trempé à une vitesse de refroidissement d'au moins 100°C (100 K) par seconde pendant une durée de 0,1 seconde à 4 minutes après que ledit produit soit sorti de la zone de réaction chauffée.

11. Procédé selon la revendication 1 pour convertir du nitrure d'aluminium ayant une surface spécifique inférieure à 15 m$^2$/g en un nitrure d'aluminium ayant une surface spécifique supérieure ou égale à 15 m$^2$/g qui consiste à faire passer une source d'azote et le nitrure d'aluminium en poudre ayant une surface spécifique inférieure à 15 m$^2$/g (d) à travers une zone de réaction chauffée maintenue à une température suffisante pour chauffer individuellement et essentiellement toutes les particules de nitrure d'aluminium à une vitesse de chauffage d'au moins 100°C (100 K) par seconde à une température comprise dans une gamme de températures allant de plus de 2 200°C (2 473 K) à 2 800°C (3 073 K), avec un débit suffisant pour maintenir essentiellement toutes les particules de nitrure d'aluminium dans ladite plage de températures pendant une durée suffisante pour dissocier le nitrure d'aluminium en aluminium et en azote en tant que produits de dissociation et à faire passer ensuite les produits de dissociation dans une zone de refroidissement maintenue à une température suffisante pour convertir les produits de dissociation en particules de nitrure d'aluminium ayant une surface spécifique supérieure à 15 m$^2$/g et à refroidir individuellement et essentiellement toutes lesdites particules à une vitesse de refroidissement d'au moins 100°C (100 K) par seconde jusqu'à une température au-dessous de 800°C (1 073 K).

12. Procédé selon l'une des revendications précédentes, dans lequel la zone de réaction est chauffée à une température de 2 200 à 2 500°C (2 473 à 2 773 K), à condition que ladite température soit supérieure à 2 200°C (2 473 K) lorsque la matière particulaire est de l'aluminium métallique particulaire (a) ou du nitrure d'aluminium ayant une surface spécifique inférieure à 15 m$^2$/g.

13. Procédé selon l'une des revendications précédentes, dans lequel ladite vitesse de chauffage est de 10 000 à 1 000 000°C/s (10 000 à 1 000 000 K/s).